(19) **Europäisches Patentamt**
**European Patent Office**
**Office européen des brevets**

(11) **EP 2 535 981 B1**

(12) **EUROPEAN PATENT SPECIFICATION**

(45) Date of publication and mention
of the grant of the patent:
**17.10.2018 Bulletin 2018/42**

(51) Int Cl.:
*H01Q 1/38* (2006.01)   *H01Q 5/00* (2015.01)
*H04B 1/18* (2006.01)   *H04B 1/16* (2006.01)

(21) Application number: **11827760.7**

(86) International application number:
**PCT/CN2011/072936**

(22) Date of filing: **18.04.2011**

(87) International publication number:
**WO 2012/113175 (30.08.2012 Gazette 2012/35)**

(54) **FREQUENCY MODULATION ANTENNA REALIZATION EQUIPMENT AND MOBILE TERMINAL**

VORRICHTUNG ZUR HERSTELLUNG EINER FREQUENZMODULATIONSANTENNE UND MOBILES ENDGERÄT DAFÜR

ÉQUIPEMENT DE RÉALISATION D'ANTENNE À MODULATION DE FRÉQUENCE ET TERMINAL MOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.02.2011 CN 201110046960**

(43) Date of publication of application:
**19.12.2012 Bulletin 2012/51**

(73) Proprietor: **ZTE Corporation**
**Shenzhen, Guangdong 518057 (CN)**

(72) Inventor: **HE, Wenqing**
**Guangdong 518057 (CN)**

(74) Representative: **Gervasi, Gemma et al**
**Notarbartolo & Gervasi S.p.A.**
**Corso di Porta Vittoria 9**
**20122 Milano (IT)**

(56) References cited:
**WO-A2-2010/114307   CN-A- 101 807 935**
**KR-A- 20030 091 542   US-A1- 2007 052 595**

## Description

Technical Field

The present invention relates to the field of wireless communication, and more particularly, to a device for implementing a frequency modulation (FM) antenna and a mobile terminal.

Technical Background

Generally, current mobile terminals have frequency modulation (FM) functions. At present, an earphone of a mobile terminal mainly acts as an antenna for receiving FM signals. However, currently some mobile phones may use internal FM antennas to receive FM signals such that FM external playing function can be achieved without earphones.

However, since the size of an FM antenna left to a designer to design is very limited and it is difficult to achieve good clearance, in general, the function of such FM antenna is difficult to achieve the performance of an earphone antenna. Although this method overcome the disadvantage that the earphone must be inserted when receiving the FM signals, the decrease of performance due to the performance of FM signals by the internal antenna is unacceptable, which will result in decrease of user experience. Therefore, how to omit the earphone antenna and improve the reception performance of the FM antenna at the same time has become a research emphasis in designing products.

The document US 2007/052595 A1 discloses an antenna device comprising a plurality of antennas corresponding to different frequencies, respectively, and switching means for switching between the antennas depending on a frequency.

Summary of the Invention

A technical problem to be solved by the present invention is to provide a device for implementing a frequency modulation (FM) antenna and a mobile terminal. The invention is defined in the claims. In order to solve the problem described above, a device according to claim 1 and a terminal according to claim 9 are provided. Further improvements and embodiments are provided in the dependent claims.

Also provided is a device for implementing a frequency modulation (FM) antenna comprising:

> a first Print Circuit Board (PCB) containing a metal line, a device used as FM antenna, and a matching circuit, the first PCB containing the metal line and the device used as FM antenna being connected respectively to the matching circuit, wherein the first PCB containing the metal line is used as a first FM antenna and configured to receive FM signals;

the device used as FM antenna is used as a first FM antenna and configured to receive FM signals; and the matching circuit is configured to filter the FM signals received by the first FM antenna and the second FM antenna and outputs the filtered FM signals.

Preferably, the device used as FM antenna may be one of a global positioning system (GPS) antenna, Bluetooth antenna, second Print Circuit Board (PCB) containing a metal line and flexible printed circuit (FPC) containing a metal line.

Preferably, the matching circuit comprises a first matching circuit and a second matching circuit. The first matching circuit is connected to the first PCB containing the metal line and configured to match the FM signals received by the first FM antenna. The second matching circuit is connected to the device used as FM antenna and configured to match the FM signals received by the second FM antenna.

Preferably, the first matching circuit comprises a first inductor. The value range of the first inductor is [100nH, 1000nH].

Preferably, the value of the first inductor is 330nH.

Preferably, the second matching circuit comprises a first capacitor and a second inductor connected in series. Values of the first capacitor and the second inductor satisfy the following formula:

$$\frac{1}{\sqrt{L \times C}} = F$$

where L represents the value of a second inductor, C represents the value of the first capacitor, and F represents the frequency of FM frequency, $F$=[60MHz, 200MHz].

Preferably, the value range of the first capacitor is [5.6pF, 680pF]. The value range of the second inductor is [18nH, 470nH].

Preferably, the value of the first capacitor is 56pF. The value of the second inductor is 100nH.

Preferably, the metal line on the PCB is designed in the following method:

more than two vias are provided on the PCB, and the metal line passes through the provided vias successively.

Also provided is a mobile terminal is comprised of the mentioned device for implementing a frequency modulation (FM) antenna.

In order to avoid the decrease of performance of the FM antenna due to the usage of an internal antenna instead of an earphone for receiving FM signals, the present invention may improve reception performance of the FM antenna significantly by using two sets of FM antennas such that the reception of FM signals has better receive sensitivity. In addition, the two sets of FM antennas provided by the present invention make full use of space inside the mobile terminal, and will not occupy too much space of a main board so as to improve reception performance of the FM antenna while minimizing of the FM antenna, thereby enhancing user experience of FM broadcast functions of the mobile terminal.

Brief Description of the Drawings

Fig. 1 is a block diagram of a mobile terminal with FM function in accordance with the first embodiment of the present invention.

Fig. 2 is a realization diagram of co-design of a PCB containing a metal line to enhance FM performance and GPS antennas which is a device used as FM antenna in accordance with the second embodiment of the present invention.

Fig. 3 is a block diagram of the first matching circuit in FIG. 2.

Fig. 4 is a block diagram of the second matching circuit in FIG. 2.

Fig. 5 is a block diagram of the third matching circuit in FIG. 2.

Fig. 6 is a diagram of a PCB containing a metal line which saves the occupied area on the PCB at the maximum level in accordance with the third embodiment of the present invention.

Fig. 7a is a schematic diagram showing how an FM antenna on a main board and an FM antenna on a daughter board are connected by wire welding in accordance with the fourth embodiment of the present invention.

Fig. 7b is a schematic diagram showing how an FM antenna on a main board and an FM antenna on a daughter board are connected by PCB-PCB connectors in accordance with the fourth embodiment of the present invention.

Fig. 7c is a schematic diagram showing how an FM antenna on a main board and an FM antenna on a daughter board are connected by spring connectors in accordance with the fourth embodiment of the present invention

Fig. 8 is a schematic diagram of a connection mode of FM antennas on a main board and a daughter board in a bar type mobile terminal in accordance with the fifth embodiment of the present invention.

Fig. 9 is a schematic diagram of a connection mode of FM antennas on a main board and a daughter board in a slide type mobile terminal in accordance with the sixth embodiment of the present invention.

Fig. 10 is a schematic diagram of a connection mode of FM antennas on a main board and a daughter board in a clamshell type mobile terminal in accordance with the seventh embodiment of the present invention.

Preferred Embodiments of the Invention

Embodiments of the present invention will be described detailedly in conjunction with the accompanying drawings hereinafter. It should be noted that in the cases, if there is no conflict, various combinations of the embodiments of the present invention and features in the embodiments are fallen into the protection scope of the present invention.

The first embodiment

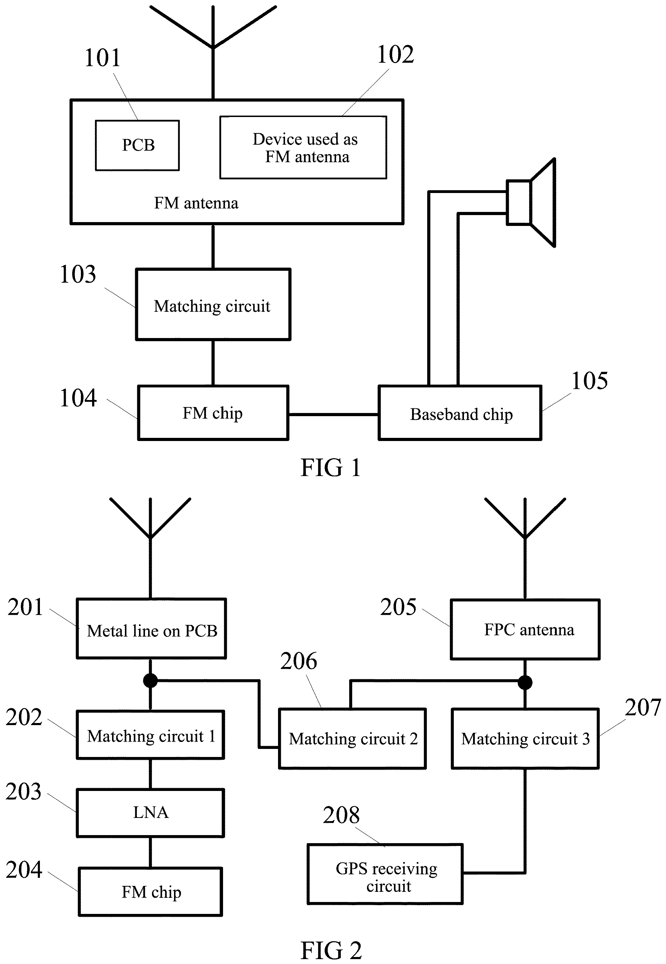

As shown in Fig. 1, a terminal including a FM antenna device in accordance with this embodiment is provided. The FM antenna device comprises a first Print Circuit Board (PCB) 101 containing a metal line, a device 102 used as FM antenna, a matching circuit 103 connected to the first PCB 101 containing the metal line and the device 102 used as FM antenna respectively.

The first PCB 101 containing the metal line is used as the first FM antenna and configured to receive FM signals.

The device 102 that is used as an FM antenna is used as the second FM antenna and configured to receive FM signals.

The matching circuit 103 is configured to filter the FM signals received by the first FM antenna and the second FM antenna and outputs the filtered FM signals.

The work process is shown as follows: the FM signals received by the first FM antenna and the second FM antenna are input into the matching circuit; after matched and filtered by the matching circuit, the FM signals are input into a FM chip 104; the FM chip 104 converts the FM signals into audio signals, and then the audio signals are input into a base-band chip 105 to be filtered and amplified; finally, the audio signals are output by the base-band chip to an audio output unit (for example, Speaker or earphone) for playing.

The FM device may also comprise a low noise amplifier (LNA) connected between the matching circuit 103 and the FM chip 104 and configured to receive and filter FM signals output from the matching circuit 103 and then output them to the FM chip 104.

The device used as FM antenna may be one of a global positioning system (GPS) antenna, Bluetooth antenna, second Print Circuit Board (PCB) containing a metal line and flexible printed circuit (FPC) containing a metal line. When the device used as FM antenna is the second PCB containing the metal line or the FPC containing the metal line, the circuit board containing the metal line is used as the second FM antenna.

By using the device in the terminal itself as the FM antenna and combining it with the PCB containing the metal line, better FM reception performance can be obtained. The reception performance of the FM antenna is improved significantly compared with schemes of using only the PCB containing the metal line as the FM antenna or using only the GPS antenna as the FM antenna or using only the FPC containing the metal line as the FM antenna or using only the Bluetooth antenna as the FM antenna. In this embodiment, when a shorter metal line is designed on the PCB, better reception performance can still be obtained, thereby achieving miniaturization of the FM antenna device and having great commercial value. When the PCB containing the metal line is used as the FM antenna, the area chosen for the PCB containing the metal line used as the FM antenna may be the area without any wires or components where has little effect on the performance of the other part of the main board, for example, the area may be the corner of the PCB, so as to enhancing reception performance of the FM antenna and improving user experience of FM function. In the case, not too much area is occupied.

The second embodiment

Fig. 2 shows a realization diagram of an FM antenna in conjunction with the PCB containing the metal line with enhanced FM performance using a section of FPC in a GPS antenna. As shown in Fig. 2, there are three signal paths.

The first signal path: FM signals received by the PCB containing the metal line 201 are amplified by the low noise amplifier (LNA) 203 through the first matching circuit 202 and input to the FM chip 204. The first signal path is used to receive the FM signals. The first matching circuit 202 is used to isolate GPS signals and match the FM signals.

The second signal path: FM signals received by the FPC antenna 205 (in this embodiment, a section of FPC in the GPS antenna is used as the FM antenna) are amplified by the LNA 203 through the second matching circuit 206 and input to the FM chip 204.

The third signal path : GPS antenna is used to receive the GPS signals. The third matching circuit 207 is used to match GPS signals and isolate the FM signals.

The first signal path and second signal path cooperates to facilitate the reception of the FM signals.

By experiment, in the embodiment, using the first signal path only or using the second signal path only will not achieve good receiving of the FM signals. Good FM performance can be obtained only when both the first signal path and second signal path are used. Furthermore, in this embodiment, more than 50 percent of area for the FM antenna and more than 50 percent for the length of the mental line of the FM antenna are saved.

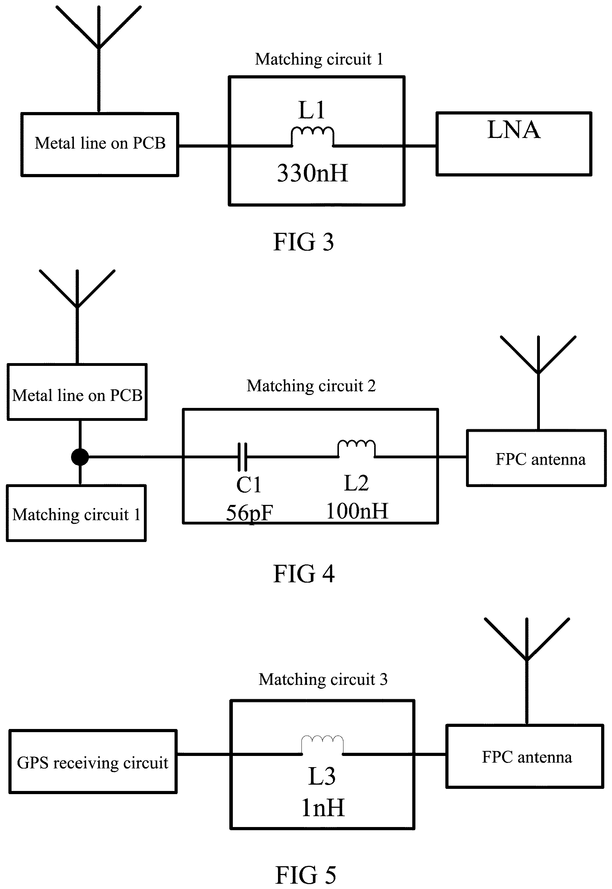

Structures of the first matching circuit, the second matching circuit and the third matching circuit are shown in Fig. 3, Fig.4 and Fig.5 respectively.

Fig. 3 shows the structure of the first matching circuit. In the figure, the value of inductor $L1$ is 330nH which is the optimized matching value of $L1$. The series inductor with the value of 330nH will match the FM frequency band well and isolate the GPS frequency band (centered at 1.575GHz) for above 20dB. However, 220nH is also a possible value of $L1$. Using the inductor with the value above 100nH can implement good filtering effect for signals with frequencies above 800MHz and improve the reception performance of the FM antenna. The value range of the $L1$ is [100nH, 1000nH].

Fig.4 shows the structure of the second matching circuit which comprises the capacitor $C1$ and inductor $L2$ connected in series. The value of the capacitor $C1$ is preferably 56pF and the range of possible values is [5.6pF, 680pF]. The value of the inductor $L1$ is preferably 100nH and the range of possible values is [18nH, 470nH]. The values of the capacitor and the inductor are determined according to the following formula:

$$\frac{1}{\sqrt{L \times C}} = F$$

where L represents the value of the inductor, $C$ represents the value of the capacitor and F represents the frequency of the FM radio. Generally, $F$ is around 100MHz, and is often within the range of [60MHz, 200MHz].

the second matching circuit has three roles of: (1) filtering out-band noise of FM radio; (2) matching the FM signals; (3)presenting the GPS signals from passing through the second matching circuit so as to ensure that the performance of GPS will not be affected.

Fig. 5 shows the structure of the third matching circuit. In the third matching circuit, the optimized matching value of $L3$ is 1nH in the embodiment. The series inductor with the value of 1nH will match the GPS frequency band well.

It is noted that the GPS antenna should not be connected to the ground directly. Or the performance of the FM antenna will be affected seriously.

In the embodiment, the device used as FM antenna is the FPC containing the metal line and this FPC is located in the GPS reception system. In other embodiments, the device used as FM antenna, as described above, may also be another PCB containing the metal line or a Bluetooth antenna or other device which can be used as FM antenna. At this point, the third matching circuit is a part of a circuit where the device used as FM antenna is located, which may be designed by those skilled in the art according to requirements of the circuit where the device used as FM antenna is located, and will not be repeated.

## The third embodiment

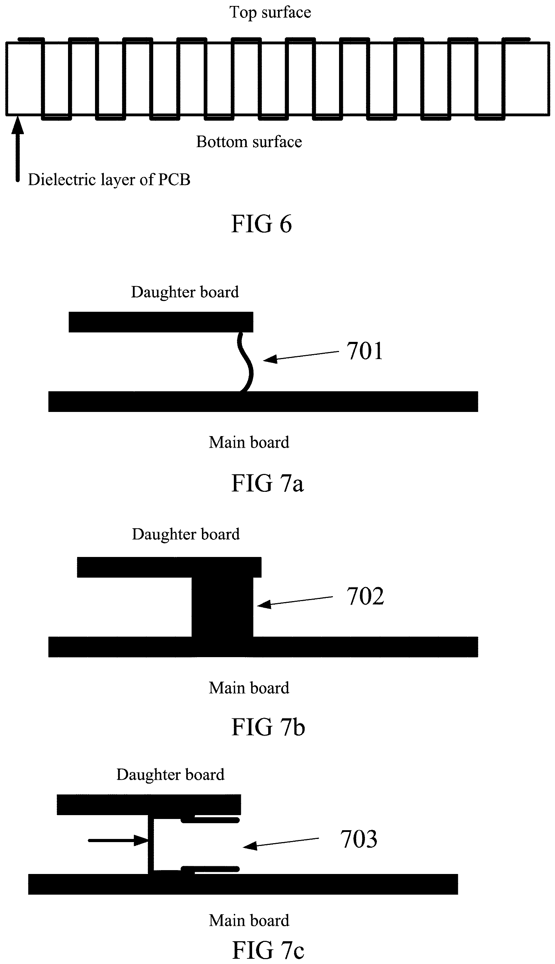

Fig. 6 is one method of layout of a PCB containing a metal line. The metal line (one metal line or one strand of metal lines) may be provided in the following method: more than two vias are provided on the PCB, and the metal line passes through the provided vias successively.

There are two methods of the layout of the metal line.

The first method: similar to a zigzag line, up and down directions of the line are alternate (referring to FIG. 6). A fragment of the mental line on the top surface of the PCB is drawn and one via is made, for example, from top to bottom, and a little fragment of the mental line is drawn and a via is made from bottom to top, and a little fragment of the mental line is drawn and then a via is made from top to bottom again. In this method, many vias are on the FM antenna area. The vias are used as parts of the antenna. In this method, it is easy to get the maximum length of the FM antenna on the PCB for the length of the via (one via will add about 1mm). This method is shown in Fig. 6.

The second method: the metal line bypasses the edge of the PCB, which is known as edge binding. The vias are made at both edges of the PCB and are connected to the mental line from top to top and form bottom to bottom. The mental lines in this method are around the dielectric material.

The first method used more widely will be described by one example.

In this method, the thickness of the PCB is used fully to realize the FM antenna on the PCB. As is shown in Fig. 6, a fragment of the metal line is drawn in the top surface of the PCB and reaches the bottom surface through the first via. Then a fragment of the metal line is drawn in the bottom surface of the PCB and reaches the top surface through the second via, and so on, until this kind of the metal line and vias are laid out across the entire area on the PCB for the design of the FM antenna. The FM antenna designed in this way occupies typically a rectangular area, and occupies the corner or edge of the PCB. Therefore, space in the mobile terminal is saved significantly. In addition, vias themselves are also act as radiation units. Thus, the thickness of the PCB is fully used by making such vias on the PCB to realize the FM antenna. The length of the antenna is increased and the performance of the FM antenna is improved. Another advantage is to keep the metal line from the ground plane on the PCB as far as possible, as the FM antenna occupies a small area only.

## The fourth embodiment

The embodiment describes a connection method of FM antennas of a main board and a daughter board, as is shown in Fig. 7a, Fig. 7b and Fig. 7c. In a mobile terminal, more than one PCB may be used. So using this feature, the FM antennas may be designed on different PCBs in the mobile terminal and then be connected together. In a bar type mobile terminal, slide type mobile terminal and clamshell type mobile terminal and other types of mobile terminals, this method is feasible. In the bar type mobile terminal, The FM antennas on the two boards may be connected by wire welding 701, or PCB-PCB connectors 702 or spring connectors 703. In the slide type mobile terminal and clamshell type mobile terminal, considering the reliability and the flexibility of the connection with frequently actions of sliding and flipping, the FM antennas on the two boards are connected commonly by FPC-PCB connectors to connect the FPC to the PCB.

## The fifth embodiment

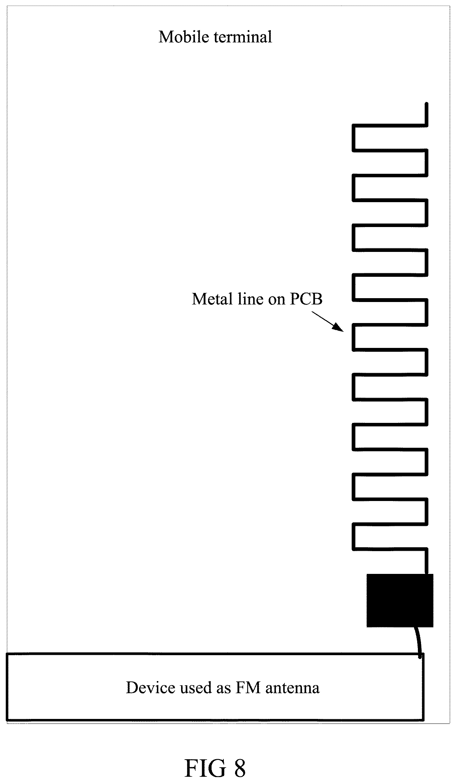

The embodiment describes a scheme of designing FM antennas on both a main board and a daughter board in a bar type mobile terminal. As is shown in Fig. 8, the connection method of the FM antennas of the main board and the daughter board may be one of the following methods: welding, buckling and FPC connection. The FM antennas are designed on both the main board and the daughter board and are connected accordingly. In addition, the FM antennas may be designed all on the daughter board.

## The sixth embodiment

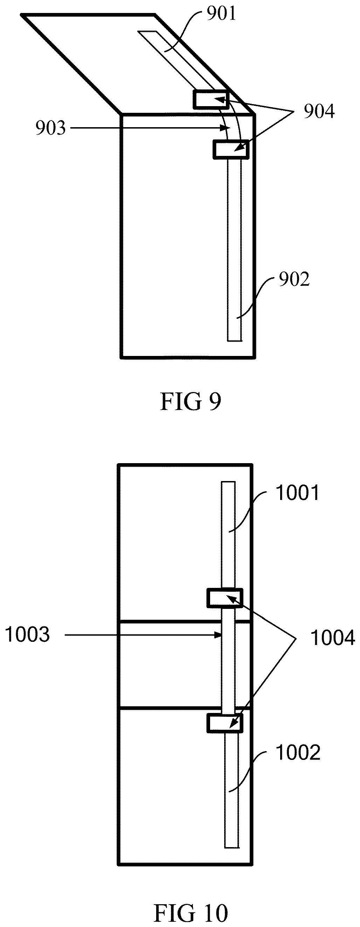

In the embodiment, there is an internal antenna made of FPC material for receiving FM signals in a mobile terminal. As is shown in Fig. 9, the mobile terminal in accordance with the embodiment is a clamshell type mobile terminal. A main board and a daughter board are connected by a PCB containing a metal line, so it is possible to design the FM antenna on the FPC. And it is also possible to design the FM antennas on the main board and the daughter board or on the main board only or on the daughter board only. Considering the reliability and the flexibility of the connection, the main board and the daughter board are connected by FPC - FPC connectors. In Fig. 9, 901 is the first FPC on the first cover. 902 is the second FPC on the second cover. 901 and 902 are realized by a PCB board containing a metal line. 903 is the third FPC connected to the first FPC and the second FPC. 904 are the FPC-PCB connectors to connect the first board and the second board by connecting the first FPC and the second FPC. FM antennas may be designed on the first FPC, the second FPC and the third FPC. Preferably, in addition to the function of the FM antenna, other functions may be used, for example, the metal line connects a LED lamp or GPS antenna, and so on.

For the clamshell type mobile terminal, the performance of the FM antenna is better when the cover of the phone is open.

The seventh embodiment

In the embodiment, there is an internal antenna made of FPC material for receiving FM signals in a mobile terminal. As is shown in Fig. 10, the mobile terminal in accordance with the embodiment is a slide type mobile terminal. A main board and a daughter board are connected by an FPC containing metal lines, so it is possible to design the FM antenna on the FPC. And it is also possible to design the FM antennas on the main board and the daughter board or on the main board only or on the daughter board only. Considering the reliability and the flexibility of the connection, the main board and the daughter board are connected by FPC-PCB connectors. In Fig. 10, 1001 is the first FPC on the upper shell of the clamshell type mobile terminal. 1002 is the second FPC on the lower shell of the clamshell type mobile terminal. 1004 shows the FPC connectors. FM antennas may be designed on the first FPC, the second FPC and the third FPC. Preferably, in addition to the function of the FM antenna, other functions may be used, for example, the metal line connects a LED lamp or GPS antenna, and so on.

For the slide type mobile terminal, the performance of the FM antenna is better when the slide cover of the phone is open.

It should be understood by those skilled in the art that all or part of steps in the methods described above may be completed by relevant hardware instructed by programs which may be stored in a computer readable storage medium, such as read only memory (ROM), disk or optical disk, etc. Optionally, all or part of steps of the embodiments described above may be implemented using one or more integrated circuits. Accordingly, each module/unit in the embodiments may be implemented in the form of hardware or software function module. The present invention is not limited to combinations of hardware and software in any specific form.

Industrial Applicability

The present invention provides a device for implementing a frequency modulation (FM) antenna comprising a first Print Circuit Board (PCB) containing a metal line, a device used as FM antenna, a matching circuit. The first PCB containing the metal line and the device used as FM antenna are connected respectively to the matching circuit so as to improve reception performance of the FM antenna. The present invention may improve reception performance of the FM antenna significantly by using two sets of FM antennas such that receiving of FM signals has better receiving sensitivity. In addition, the two sets of FM antennas provided by the present invention make full use of space inside the mobile terminal, and will not occupy too much space of a main board so as to improve reception performance of the FM antenna while implementing miniaturization of the FM antenna, thereby enhancing user experience of FM broadcast functions. The present invention may be implemented in a way of software or hardware.

**Claims**

1. A device for implementing a frequency modulation, FM, antenna comprising:

   a first Print Circuit Board, PCB, (101), a device (102) configured to be used as FM antenna, a matching circuit (103) and a FM chip (104), wherein the first PCB (101) contains a metal line, and wherein the first PCB (101), the device (102) configured to be used as FM antenna and the FM chip (104) are connected respectively to the matching circuit (103), wherein
   the first PCB (101) is configured to be used as a first FM antenna and receive FM signals;
   the device (102) configured to be used as FM antenna is configured to be used as a second FM antenna and receive FM signals; and
   the matching circuit (103) is configured to filter the FM signals received by the first FM antenna and the second FM antenna and output the filtered FM signals,
   **characterized in that**,
   the matching circuit comprises a first matching circuit (202) and a second matching circuit (206), and wherein
   the first matching circuit (202) is connected to the first PCB (101, 201) and configured to match the FM signals received by the first FM antenna, so that FM signals received by the first PCB (101, 201) are input to the FM chip (104, 204) through the first matching circuit (202), and the second matching circuit (206) is connected to the device (102, 205) configured to be used as FM antenna and configured to match the FM signals received by the second FM antenna, so that FM signals received by the device (102, 205) configured to be used as FM antenna are input to the FM chip (104, 204) through the second matching circuit (206).

2. The device according to claim 1, wherein the device (102, 205) configured to be used as FM antenna is chosen in the group comprising: global positioning system, GPS, antenna, Bluetooth antenna, second Print Circuit Board, PCB, containing a metal line, and flexible printed circuit, FPC, containing a metal line.

3. The device according to claim 1, wherein the first matching circuit (202) comprises a first inductor, and the value range of the first inductor is 100 nH to 1000nH.

**4.** The device according to claim 3, wherein the value of the first inductor is 330nH.

**5.** The device according to claim 1 or 3 or 4, wherein the second matching circuit (206) comprises a first capacitor and a second inductor connected in series, values of the first capacitor and the second inductor satisfy the following formula: $\dfrac{1}{\sqrt{L \times C}} = F$ where $L$ represents the value of a second inductor, $C$ represents the value of the first capacitor, and $F$ represents the frequency of FM frequency, $F$=60 MHz to 200 MHz.

**6.** The device according to claim 5, wherein the value range of the first capacitor is 5.6 pF to 680 pF, and the value range of the second inductor is 18 nH to 470 nH.

**7.** The device according to claim 5 or 6, wherein the value of the first capacitor is 56 pF and the value of the second inductor is 100nH.

**8.** The device according to claim 1 or 2 or 3, wherein the metal line on the PCB is designed in the following method:
more than two vias are provided on the PCB, and the metal line passes through the provided vias successively.

**9.** A mobile terminal comprising the device for implementing a frequency modulation, FM, antenna according to any one of claims 1-8.

**Patentansprüche**

**1.** Vorrichtung zur Implementierung einer Frequenzmodulations-(FM)-Antenne, umfassend:

eine erste gedruckte Schaltung (PCB) (101), eine Vorrichtung (102), die ausgebildet ist, um als FM-Antenne verwendet zu werden, eine Anpassungsschaltung (103) und einen FM-Chip (104), wobei die erste PCB (101) eine metallische Leitung aufweist und wobei die erste PCB (101), die zur Verwendung als FM-Antenne ausgebildete Vorrichtung (102) und der FM-Chip (104) jeweils mit der Anpassungsschaltung (103) verbunden sind, wobei die erste PCB (101) ausgebildet ist, um als erste FM-Antenne verwendet zu werden und FM-Signale zu empfangen; die Vorrichtung (102), die ausgebildet ist, um als FM-Antenne verwendet zu werden, ausgebildet ist, um als eine zweite FM-Antenne verwendet zu werden und FM-Signale zu empfangen; und

die Anpassungsschaltung (103) ausgebildet ist, um die von der ersten FM-Antenne und der zweiten FM-Antenne empfangenen FM-Signale zu filtern und die gefilterten FM-Signale auszugeben,
**dadurch gekennzeichnet, dass**
die Anpassungsschaltung eine erste Anpassungsschaltung (202) und eine zweite Anpassungsschaltung (206) umfasst, und wobei die erste Anpassungsschaltung (202) mit der ersten PCB (101, 201) verbunden und ausgebildet ist, um den von der ersten FM-Antenne empfangenen FM-Signalen zu entsprechen, so dass die von der ersten PCB (101, 201) empfangenen FM-Signale in den FM-Chip (104, 204) durch die erste Anpassungsschaltung (202) eingegeben werden,
und die zweite Anpassungsschaltung (206) mit der als FM-Antenne ausgebildeten Vorrichtung (102, 205) verbunden und ausgebildet ist, um den von der zweiten FM-Antenne empfangenen FM-Signalen zu entsprechen, so dass die von der als FM-Antenne zu verwendenden Vorrichtung (102, 205) empfangenen FM-Signale in den FM-Chip (104, 204) durch die zweite Anpassungsschaltung (206) eingegeben werden.

**2.** Vorrichtung nach Anspruch 1, wobei die Vorrichtung (102, 205), die ausgebildet ist, um als FM-Antenne verwendet zu werden, ausgewählt ist aus der Gruppe umfassend:
globale Positionierungssystem-(GPS)-Antenne, Bluetooth-Antenne, zweite gedruckte Schaltung (PCB) mit einer metallischen Leitung und flexible gedruckte Schaltung (FPC) mit einer metallischen Leitung.

**3.** Vorrichtung nach Anspruch 1, wobei die erste Anpassungsschaltung (202) einen ersten Induktor umfasst und der Wertebereich des ersten Induktors zwischen 100 nH und 1000 nH liegt.

**4.** Vorrichtung nach Anspruch 3, wobei der Wert des ersten Induktors bei 330 nH liegt.

**5.** Vorrichtung nach Anspruch 1 oder 3 oder 4, wobei die zweite Anpassungsschaltung (206) einen ersten Kondensator und einen zweiten Induktor umfasst, die in Reihe geschaltet sind, wobei die Werte des ersten Kondensators und des zweiten Induktors die folgende Formel erfüllen:

$$\frac{1}{\sqrt{L \times C}} = F$$

wobei L den Wert eines zweiten Induktors, C den Wert des ersten Kondensators und F die Frequenz der FM-Frequenz darstellt und F = 60 MHz bis 200 MHz ist.

6. Vorrichtung nach Anspruch 5, wobei der Wertebereich des ersten Kondensators zwischen 5,6 und 680 pF und der Wertebereich des zweiten Induktors zwischen 18 nH und 470 nH liegt.

7. Vorrichtung nach Anspruch 5 oder 6, wobei der Wert des ersten Kondensators bei 56 und der Wert des zweiten Induktors bei 100 nH liegt.

8. Vorrichtung nach Anspruch 1 oder 2 oder 3, wobei die metallische Leitung auf der PCB auf folgende Weise ausgebildet ist:
mehr als zwei Kontaktlöcher sind auf der PCB vorgesehen und die metallische Leitung geht anschließend durch die vorgesehenen Kontaktlöcher hindurch.

9. Mobiles Endgerät, umfassend die Vorrichtung zur Implementierung einer Frequenzmodulations-(FM)-Antenne nach einem der Ansprüche 1-8.

## Revendications

1. Dispositif pour mettre en oeuvre une antenne à modulation de fréquence, FM, comprenant :

une première carte de circuit imprimé, PCB, (101), un dispositif (102) configuré pour être utilisé comme une antenne FM, un circuit d'adaptation (103) et une puce FM (104), dans lequel la première PCB (101) contient une ligne métallique, et dans lequel la première PCB (101), le dispositif (102) configuré pour être utilisé comme une antenne FM et la puce FM (104) sont connectés respectivement au circuit d'adaptation (103), dans lequel la première PCB (101) est configurée pour être utilisée comme une première antenne FM et recevoir des signaux FM ; le dispositif (102) configuré pour être utilisé comme une antenne FM est configuré pour être utilisé comme une deuxième antenne FM et recevoir des signaux FM ; et le circuit d'adaptation (103) est configuré pour filtrer les signaux FM reçus par la première antenne FM et la deuxième antenne FM et délivrer en sortie les signaux FM filtrés, **caractérisé en ce que**, le circuit d'adaptation comprend un premier circuit d'adaptation (202) et un deuxième circuit d'adaptation (206), et dans lequel le premier circuit d'adaptation (202) est connecté à la première PCB (101, 201) et configuré pour adapter les signaux FM reçus par la première antenne FM, de manière que des signaux FM reçus par la première PCB (101, 201) soient appliqués en entrée sur la puce FM (104, 204) par le biais du premier circuit d'adaptation (202), et le deuxième circuit d'adaptation (206) est connecté au dispositif (102, 205) configuré pour être utilisé comme une antenne FM et configuré pour adapter les signaux FM reçus par la deuxième antenne FM, de manière que des signaux FM reçus par le dispositif (102, 205) configuré pour être utilisé comme une antenne FM soient appliqués en entrée sur la puce FM (104, 204) par le biais du deuxième circuit d'adaptation (206).

2. Dispositif selon la revendication 1, dans lequel le dispositif (102, 205) configuré pour être utilisé comme une antenne FM est choisi dans le groupe comprenant :
une antenne de système de positionnement global, GPS, une antenne Bluetooth, une deuxième carte de circuit imprimé, PCB, contenant une ligne métallique, et un circuit imprimé flexible, FPC, contenant une ligne métallique.

3. Dispositif selon la revendication 1, dans lequel le premier circuit d'adaptation (202) comprend une première inductance et la plage de valeurs de la première inductance est de 100 nH à 1000 nH.

4. Dispositif selon la revendication 3, dans lequel la valeur de la première inductance est 330 nH.

5. Dispositif selon la revendication 1 ou 3 ou 4, dans lequel
le deuxième circuit d'adaptation (206) comprend un premier condensateur et une deuxième inductance connectés en série, des valeurs du premier condensateur et de la deuxième inductance satisfont la formule suivante :

$$\frac{1}{\sqrt{L \times C}} = F$$

où L représente la valeur d'une deuxième inductance, C représente la valeur du premier condensateur et F représente la fréquence de fréquence FM, F= 60 MHz à 200 MHz.

6. Dispositif selon la revendication 5, dans lequel la plage de valeurs du premier condensateur est de 5,6 pF à 680 pF, et la plage de valeurs de la deuxième inductance est de 18 nH à 470 nH.

7. Dispositif selon la revendication 5 ou 6, dans lequel la valeur du premier condensateur est 56 pF et la valeur de la deuxième inductance est 100 nH.

8. Dispositif selon la revendication 1 ou 2 ou 3, dans lequel la ligne métallique sur la PCB est conçue selon le procédé suivant :
   plus de deux trous d'interconnexion sont prévus sur la PCB, et la ligne métallique passe successivement à travers les trous d'interconnexion prévus.

9. Terminal mobile comprenant le dispositif pour mettre en oeuvre une antenne à modulation de fréquence, FM, selon l'une quelconque des revendications 1 à 8.

FIG 1

FIG 2

Matching circuit 1

| Metal line on PCB | | L1 | | LNA |

**FIG 3**

Matching circuit 2

Metal line on PCB

Matching circuit 1

C1 56pF    L2 100nH

FPC antenna

**FIG 4**

Matching circuit 3

GPS receiving circuit

L3 1nH

FPC antenna

**FIG 5**

Top surface

Bottom surface

Dielectric layer of PCB

FIG 6

Daughter board

701

Main board

FIG 7a

Daughter board

702

Main board

FIG 7b

Daughter board

703

Main board

FIG 7c

Mobile terminal

Metal line on PCB

Device used as FM antenna

FIG 8

FIG 9

FIG 10

**EP 2 535 981 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007052595 A1